# EUROPEAN PATENT APPLICATION

(11) **EP 2 330 485 A1**
(43) Date of publication of application: **08.06.2011**
(21) Application number: 09814443.9
(22) Date of filing: 21.08.2009
(51) Int. Cl.: G06F 3/041

(54) **INPUT UNIT, METHOD FOR CONTROLLING SAME, AND ELECTRONIC DEVICE PROVIDED WITH INPUT UNIT**

(30) Priority: 17.09.2008 JP 2008238063
(71) Applicant: NEC Corporation, Minato-ku Tokyo 108-8001 (JP)
(72) Inventor: KAIDA, Soh, Tokyo 108-8001 (JP)
(74) Representative: Vossius & Partner
(86) International application number: PCT/JP2009/065017
(87) International publication number: WO 2010/032598

(57) **Abstract**

An input device comprises display means that displays information, an input panel that is arranged at a display surface side of the display means, and has an input surface and outputs a contact information by detecting a contact at the input surface, detection means that outputs a detection signal which shows that a pressing force is applied when the pressing force is applied on the input surface of the input panel, and control means that detects a contact position of the input panel based on the contact information which the input panel outputted, sets display information at a position corresponding to the contact position of the display means as a selecting status, and executes a process in relation to the display information based on the detection signal when the detection means outputs the detection signal under a state that the input panel continues detecting the contact.

## Description

### TECHNICAL FIELD

The present invention relates to an input unit, method for controlling for the same and an electronic device with the input unit. In particular, the present invention relates to the input unit equipped with a touch panel at a display surface side of the display device, method for controlling same and an electronic device with the input unit.

### BACKGROUND ART

In recent years, for portable electronic apparatuses such as cellular phones, music players, game devices, and electronic dictionaries, models equipped with the input device, in which the touch panel is arranged at the display surface side (view side) of the display panel, are becoming popular. With regard to an input operation of the electronic apparatus equipped with the input device, at first, a key display including a menu or icon is displayed on a screen of a display panel, and then a user contacts the touch panel which is overlapping on the screen. As the result, the electronic apparatus detects the contact position and executes a function corresponding to the key display of the contact position.

Where, followings describe related arts of the input device equipped with the touch panel.

For example, the Japanese Patent Application Laid-Open No. 1994(H06)-332607 disclosed a configuration where a plurality of pressure sensors which detects a pressing force on the touch panel is equipped. In addition, the patent gazette disclosed that a coordinate value of the contact position is detected by the touch panel and also the pressing force is detected by the pressure sensor, and the detected results are displayed on the display device

Further, for example, Japanese Patent Application Publication No. 1998(H10)-511198 and Japanese Patent Application Laid-Open No. 2006-126997 disclosed a configuration of equipping a plurality of pressure sensors and strain gage sensors which can detect a pressed position to the touch panel, which is composed of a transparent acrylic plate or a glass plate which does not have a position detection function. Moreover, in these patent gazettes, it is disclosed that the coordinate value and the pressing force of the contact position are detected by the pressure sensors or the strain gage sensors.

The electronic apparatus equipped with the input device in the Japanese Patent Application Laid-Open No. 1994-332607, Japanese Patent Application Publication No. 1998-511198, and Japanese Patent Application Laid-Open No. 2006-126997 disclosed the following control method at a time of the input operation, as an example. That is, by contacting the touch panel on the display screen at the position corresponding to the displayed key display by a user, a function corresponding to the key display is executed as a position of the key display is detected.

Further, as an alternative control method, it is also a known method to select any key display by a first contact with the touch panel, and then execute the function corresponding to the key display by a second contact with the touch panel.

### DISCLOSURE OF THE INVENTION

### [Problems to be solved by the Invention]

The electronic apparatus equipped with the input device in the Japanese Patent Application Laid-Open No. 1994-332607, Japanese Patent Application Publication No. 1998-511198, and Japanese Patent Application Laid-Open No. 2006-126997 stated above disclosed that selection of the key display on the screen and execution of a selected function is done almost simultaneously by a single contact with a touch panel by the user. Therefore, a problem is raised that it is difficult for the user to confirm whether or not the desired key display (i.e. the function corresponding to the key display) could be accurately selected.

In addition, the another control method mentioned above, because it needs to contact with the touch panel a plurality of times, has a problem that steps (procedures) required for input operation by the user is increased.

The object of the present invention is to provide an input device and a control method thereof that solves the problems mentioned above, and an electronic apparatus equipped with the input device.

### [Means for solving the problems]

An input device comprises display means that displays information; an input panel that is arranged at a display surface side of the display means, and has an input surface and outputs a contact information by detecting a contact at the input surface; detection means that outputs a detection signal which shows that a pressing force is applied when the pressing force is applied on the input surface of the input panel; and control means that detects a contact position of the input panel based of the contact information which the input panel outputted, sets display information at a position corresponding to the contact position of the display means as a selecting status, and executes a process in relation to the display information based on the detection signal when the detection means outputs the detection signal under a state that the input panel continues detecting the contact.

A control method of an input device that has a display means which displays information and has an input panel which is arranged in a display surface side of the display means, comprising: setting display information at a position of the display means corresponding to a contacted position of the input surface as a selecting status when the input panel detects a contact at the input surface of the input panel, and executing processes in relation to the display information based on a detect situation when detecting that a pressing force is applied on the input surface of the input panel under a status that the input panel keeps detecting the contact.

An electronic apparatus of the present invention includes the above-mentioned input device and an operation functioning unit that executes a specific function based on the input operation to the input device.

### [Effects of the invention]

According to the present invention, the selecting status of the key display corresponding to the function desired to execute can be checked well, when inputting operation on the touch panel. In addition, a function corresponding to the key display can be executed by simple steps (procedures).

### BRIEF DESCRIPTION OF THE DRAWINGS

Fig. 1 is a schematic block diagram showing a first embodiment of an input device according to the present invention.
Fig. 2 is a schematic block diagram showing an electronic apparatus equipped with the input device according to the present invention.
Fig. 3 is a schematic block diagram showing a second embodiment of the input device according to the present invention.
Fig. 4A is a perspective drawing showing an example of a schematic configuration of the input device according to the second embodiment.
Fig. 4B is a perspective drawing showing an example of a status which pressing force of more than predetermined level is applied on the input surface of a touch panel of the input device which is shown in Fig. 4A.
Fig. 5 is a flowchart showing an example of a control method of the input device according to a second embodiment.
Fig. 6A is an example of a conceptual drawing describing the control method of the input device according to the embodiment.
Fig. 6B is a conceptual drawing showing an example of the status which pressing force of more than predetermined level is applied on the input surface of the touch panel of the input device which is shown in Fig. 6A.
Figs. 7A to 7D are diagrams showing an example of a display unit for describing the control method of the input device according to the embodiment.
Fig. 8A is a perspective drawing showing another exemplary configuration of the input device according to the second embodiment.
Fig. 8B is a perspective drawing showing an example of a status which pressing force is applied from a biased direction on the input surface of the touch panel of the input device which is shown in Fig. 8A.
Fig. 9A is a perspective drawing showing another exemplary configuration of the input device according to the second embodiment.
Fig. 9B is a perspective drawing showing an example of a status where pressing force is applied from a biased direction on the input surface of the touch panel of the input device which is shown in Fig. 9A.
Fig. 10A is a perspective drawing showing a third embodiment of the input device according to the present invention.
Fig. 10B is an example of a side view drawing of the input device which is shown in Fig. 10A.
Fig. 11 is a schematic configuration diagram showing a fourth embodiment of the input device according to the present invention.
Fig. 12A is a side view drawing showing an example of a schematic configuration of the input device according to the embodiment.
Fig. 12B is a drawing showing an example of the status where pressing force of more than predetermined level is applied on the input surface of the touch panel of the input device which is-shown in Fig. 12A.
Fig. 13 is a flowchart showing an example of the control method of the input device according to the fourth embodiment.

### [Description of the symbols]

- 10: display means
- 11: display unit
- 11a: substrate
- 11b: display area
- 20: input panel
- 21: touch panel
- 30: detection means
- 31 to 34: push down detection unit
- 31a to 34a: action part
- 35: guide-rail
- 36: pressure sensor
- 40: control means
- 41: control unit
- 42: memory unit
- 51: piezoelectric element
- 61: housing
- 100: input device
- 200: operation functioning unit
- FNG: finger

### BEST MODE FOR CARRYING OUT THE INVENTION

Hereafter, the specific embodiments of the input device, the control method thereof and the electronic apparatus equipped with the input device according to the present invention is described in detail, with reference to the drawings.

### <First embodiment>

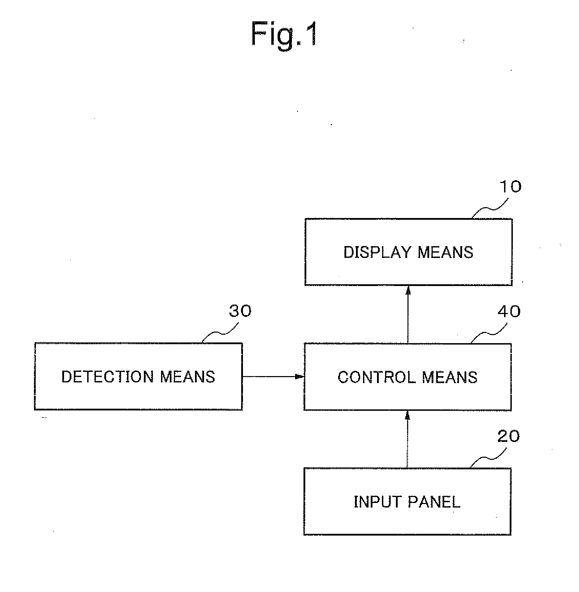

Fig. 1 is the schematic block diagram showing the first embodiment of the input device according to the present invention. As shown in Fig. 1, the input device according to the first embodiment includes a display means 10, an input panel 20, a detection means 30, and a control means 40.

The display means 10 is, at least, a display device for displaying various functional information and accumulated information or the like of the electronic apparatus in which the input device according to the embodiment is installed. The display means 10 displays these functional information and accumulated information or the like with forms such as characters and images. In the embodiment, for example, one or more menus and a plurality of icon buttons which will be selected by the user are arranged in any layout and are shown on the display means 10. Where, one among a plurality of menus or a plurality of icon buttons or the like is selected by the user by contacting on the input panel 20 which is described later, for a plurality of menus or a plurality of icon buttons or the like. In addition, it may not be able to show all the items at a time on the display means 10 because number of items is exceeding the allowable display area of the display means 10 in a case that many display items including the menu or icon button are existing. In this case, by being performing a specific input operation such as rubbing a surface of the touch panel by the user, screens which include the non-displayed menu or icon button or the like are displayed by scrolling or switching the display screen. The menu or icon button or the like which is shown in the display means 10 is an example of key display which is described in the background art.

The input panel 20 is arranged in the display surface side (i.e. view side) of the display means 10. The input panel 20 is a transparent contact position detect sensor which permeates to the view side various functional information and accumulated information or the like which is shown on the display means 10. Where, the contact object which the user uses for the input operation via the input surface of the input panel 20 includes, for example, a part of the body such as the user's finger or a nail, or an exclusive touch pen or a cap tip part of a writing utensil or the like. In the following embodiments, a case that the user executes the input operation by contacting the input panel 20 with the finger is described.

The detection means 30 is a switch which detects an applied status of pressing force to the input surface (surface) of the input panel 20. If the detection means 30 detects an impression of pressing force of more than predetermined level to the input surface of the input panel 20, the detection means 30 outputs a detection signal to the control means 40 which will be described later. Alternatively, the detection means 30 outputs a predetermined detection signal (ex. detection voltage) to the control means 40 according to pressing force which is applied on the input surface of the input panel 20. In the embodiment, for example, the detection means 30 is arranged so that it may interpose between the input panel 20 and the display means 10.

The control means 40 executes, for example, a control of displaying various functional information and accumulated information or the like on the display means 10. In addition, the control means 40 sets the menu or icon button or the like, corresponding to the contact position of the finger or the like detected by the input panel 20, as the selecting status. Further, the control means 40 outputs a control signal for executing the function corresponding to the menu or icon button or the like which is displayed on the display means 10 and is selected by the user, based on the detection signal which is outputted, from the detection means 30. The control signal is outputted to an internal circuit (corresponding to the operation functioning unit which is described later) of the electronic apparatus.

Then, the input device according to the embodiment is controlled as follows. At first, a list of the menu or icon buttons is shown on the display means 10 by the control means 40. At this stage, neither menus nor icon buttons is selected.

Then, the user contacts with a finger a specific menu or icon button having desired functions which is displayed on the input surface (surface) of the input panel 20, among the menu or icon buttons which is shown on the display means 10. The input panel 20 detects the contact. The contact information detected by the input panel 20 is outputted to the control means 40, and the control means 40 calculates the contact position of the finger on the input panel 20.

Then, when an anchor (i.e. menu or icon button which is in selectable status) exists at the position of the display means 10 corresponding to the calculated contact position, the control means 40 sets the menu or icon button as a selected status as well as controls the menu or icon button so that a focus visual is initiated. At this stage, the status is that the user still light contacts with the finger on the surface of the input panel 20, that is, the input panel 20 is in the state that it is detecting the contact, but the detection means 30 does not operate by this degree of pressing force (i.e. contacting force).

Then, the user applies with pressing force (i.e. pushing down force) of more than predetermined level with an intention of selection on the input surface of the input panel 20 with the finger placed on the input panel 20. This ensures that the detection means 30 detects the applied status of pressing force on the input panel 20 and outputs the detection signal.

The control means 40 outputs the control signal, which is for executing a function corresponding to the menu or icon button which is displayed under the focus visual and is set as the selecting status by the display means 10, to the internal circuit (i.e. operation functioning unit) of the electronic apparatus based on the detection signal from the detection means 30. In addition, following to the stated action, after the control means 40 changes to the display which shows a running state of the menu or icon button which is displayed on the display means 10 and the function is selected, immediately displays the operation screen of the function on the display means 10.

That is, in the embodiment, as a first step, the user contacts the input panel 20 with the finger or the like while the detection means 30 is keeping in the off-state (i.e. without operating the detection means 30 (set to on-operation)). Therefore, the control means 40 sets the menu or icon button which is shown on the display means 10 as the selecting status.

Then, as the second step, the user applies with pressing force of more than predetermined level with the intention of selection on the input surface of the input panel 20 by the finger or the like which continuously contacted the display means 10, then the detection means 30 activates the operation and outputs the detection signal to the control means 40. The control means 40 executes a specific function corresponding to the menu or icon button which is shown on the display means 10 and is selected, based on the detection signal.

Thus, in the embodiment, by the user's light contact with the finger or the like on the input panel 20, the desired menu or icon button which is shown on the display means 10 is set as the selecting status as well as the focus visual is initiated. That is, according to the embodiment, as shown in the background art mentioned above, there are no cases that a function is selected and executed immediately by the user's single contact with the touch panel. Accordingly, according to the embodiment, user can confirm well whether or not selecting the desired menu or icon button correctly by the focus visual or the like,

In addition, in the embodiment, the selected function is executed by applying with pressing force of more than predetermined level on the input surface of the input panel 20 without separating the finger or the like from the input surface after the menu or icon button was set as the selecting status. That is, according to the embodiment, as shown in the background art mentioned above, in order to execute a desired function, users do not need to contact a plurality of times on the touch panel. Accordingly, according to the embodiment, users can execute a desired function by simple steps (procedures).

Further, in the embodiment, after setting the menu or icon button as the selecting status by contacting with the finger or a like the menu or icon button of the desired function, the selected function is executed only in a case that the user applies with pressing force of more than predetermined level on the input surface of the input panel 20 without separating the finger or the like. That is, according to the embodiment, even if an input operation such as rubbing on the surface of the input panel 20 is done, there are no cases that the undesirable function is executed illegally. Accordingly, according to the embodiment, even if it may not be able to show all the items at a time on the display means 10 in a case that too many items including the menu or icon button or the like are existing and it is exceeding the display area of the display means 10, the scrolling display and the switching display of the screen by an input operations such as rubbing the surface of the input panel 20 is able to execute well.

Then, the followings describe the electronic apparatus equipped with the input device according to the embodiment mentioned above.

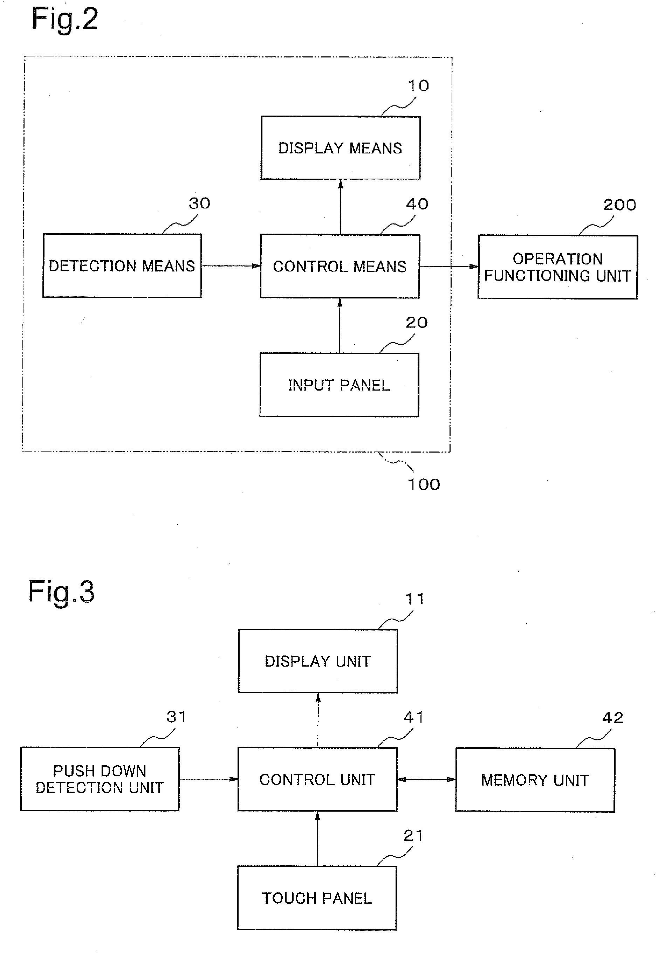

Fig. 2 is the schematic block diagram showing the electronic apparatus equipped with the input device according to the present invention. Here, the electronic apparatus which executes a specific function based on the input operation to the input device which has the configuration as-shown in Fig. 1 is described. In addition, portable communication terminals and audiovisual equipments or the like are applied, as an example of the application of the electronic apparatus according to the present invention.

As shown in Fig. 2, the electronic apparatus equipped with the input device which is mentioned above includes an input device 100 which includes the display means 10, the input panel 20, the detection means 30, and the control means 40, and an operation functioning unit 200 which executes a predetermined function based on the control signal which is outputted from the input device.

The input device 100 selects one of the menus or icon buttons among the menus or icon buttons which is displayed in a list in the display means 10, by the user's contact of the input panel 20 with the finger. Then, by user's impression of pressing force of more than predetermined level (i.e. change the detection means 30 into on-state) to the input surface of the input panel 20, the input device 100 generates the control signal for executing the specific function corresponding to the selected menu or icon button and outputs it to the operation functioning unit 200.

Specifically, the operation functioning unit 200 is the internal circuit of the electronic apparatus which realizes various operation functions such as communication controls, playback operations of images and music composition data, and display operations of accumulating data, based on the control signal from the input device 100 (i.e. control means 40).

Then, the electronic apparatus having such configuration operates as follows.

In the electronic apparatus having aforementioned configuration, by the user's contact with the input panel 20 by the finger or the like during keeping a status where the detection means 30 is in the off-state, one of the menus or icon buttons among the menus or icon buttons in the list display on the display means 10 is set as the selecting status. Then, by the user's applying with pressing force of more than predetermined level on the input surface of the input panel 20 by the finger or the like which contacted with the display means 10 with the intention of selection, the detection means 30 is activated and outputs the detection signal to the control means 40. The control means 40 outputs the control signal, which executes the specific function corresponding to displayed and selected menu or icon button of the display means 10, to the operation functioning unit 200 of the electronic apparatus based on the detection signal. The operation functioning unit 200 executes the desired operation function corresponding to the menu or icon button which the user selected, based on the control signal from the control means 40. In this case, the control means 40 receives an instruction from the operation functioning unit 200 and displays the operational screen and associated data of the operation function on the display means 10.

Thus, in the embodiment, because there are no cases that the function is selected and executed immediately by the user's single contact with the input panel 20, it can confirm well whether or not the desired menu or icon button is selected correctly. Accordingly, the embodiment can suppress an incorrect operation at a time of the input operation of the electronic apparatus.

In addition, in the embodiment, because the user does not need to contact a plurality of times with the input panel 20 in order to execute the desired function, the desired function with simple steps (procedures) is able to execute. Accordingly, the embodiment can improve intricacy when inputting operation of the electronic apparatus.

Further, in the embodiment, even if the user executes the input operation such as rubbing the surface of the input panel 20, unless the user executes successively the operation of applying pressing force on the input panel 20 after the operation of rubbing the surface, the selected function is not executed. For this reason, in the embodiment, because there are no cases that the undesirable function is executed illegally, the scrolling display and the switching display of the screen is able to execute well. Accordingly, the embodiment can suppress incorrect operations when inputting operation of the electronic apparatus.

### <Second embodiment>

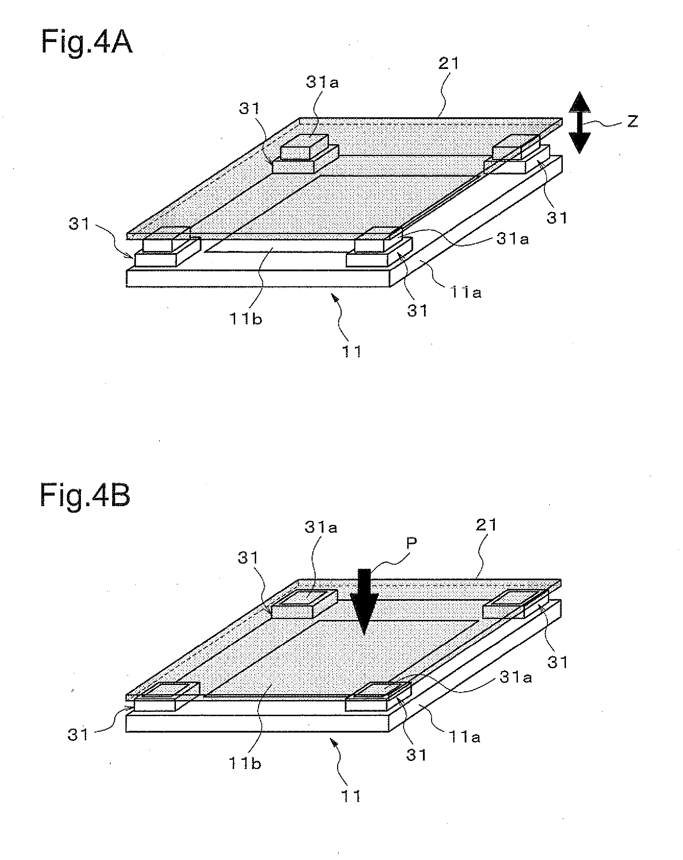

Fig. 3 is the schematic block diagram showing the second embodiment of the input device according to the present invention. Fig. 4A is the perspective drawing showing the schematic configuration of the input device according to the second embodiment. Fig, 4B is the perspective drawing showing an example of a status which pressing force of more than predetermined level is applied on the input surface of the touch panel of the input device which is shown in Fig. 4A. Here, in Fig. 4A and Fig. 4B, in order to clear the positional relationship and the operation status between respective configurations, it the touch panel 21 is indicated expediently by hatching it,

As shown in Fig. 3, the input device according to the second embodiment includes a display unit 11, the touch panel 21, a push down detection unit 31, a control unit 41, and a memory unit 42. In the embodiment, the display unit 11 is an example of the display means in the first embodiment, and the touch panel 21 is an example of the input panel in the first embodiment. In addition, in the embodiment, the push down detection unit 31 is an example of the detection means in the first embodiment, and the control unit 41 is an example of the control means in the first embodiment.

The display unit 11 is, at least, an display device in which one or more menu or icon buttons or the like which the user can select are arranged and displayed in any layout, like the display means 10 which is described in the first embodiment mentioned above. As shown in Fig. 4A, for example, the display unit 11 has a configuration of installing a display area 11b in one side (upper surface side in the drawing) of a panel substrate 11a.

Further, for example, FPD (Flat Panel Display) including LCD (Liquid Crystal Display) panel and EL (Electro-Luminescence) display panel is applied well for the display device of the display unit 11.

The touch panel 21 is a transparent contact position detect sensor which is arranged in a display surface side (upper surface side in the drawing) which is one side of the panel substrate 11a of the display unit 11, and is similar to the input panel 20 which is described in the first embodiment mentioned above. As shown in Fig. 4A, for example, the touch panel 21 is supported by the push down detection unit 31 which is arranged at the four corners on one side of the panel substrate 11a. As shown in Fig. 4B, the touch panel 21 is configured so as to sink into directions of display unit 11 (Z-direction in Fig. 4A) and relatively move (or slide) by the user's impression of pressing force P of more than predetermined level on the input surface by the finger or the like.

Further, various operation methods such as resistive film method, electrostatic capacity method, surface acoustic wave method, and vibration detection method can be applied well as the contact position detect sensor which is applied to the touch panel 21.

The push down detection unit 31 is a switch which detects the applied status of pressing force to the input surface (surface) of the touch panel 21, which is similar to the detection means 30 which is described in the first embodiment mentioned above. As shown in Fig. 4A, for example, the push down detection unit 31 is arranged at the four corners of the display surface side (upper side of the drawing) which is one side of the panel substrate 11a, and it has a configuration so as that it is possible to move (or slide) the touch panel 21 to directions of display unit 11.

Here, the push down detection unit 31 includes an action part 31a which allows the predetermined stroke and moves to the Z-direction in Fig. 4A by the impression of pressing force (i.e. pushing down force) to the input surface of the touch panel 21. As shown in Fig. 4B, the action part 31a moves to the directions of display unit 11 (i.e. compression direction) in a predetermined size, in accordance with the impression of pressing force P to the input surface of the touch panel 21. Accordingly, the push down detection unit 31 detects the push down status of the touch panel 21 and then outputs the detection signal.

In addition, the return mechanism is installed at inside and outside of the action part 31a of the push down detection unit 31 so that the action part 31a may return to an initial position by releasing the impression of pressing force (pushing down force) to the input surface of the touch panel 21. Accordingly, by releasing the impression of pressing force to the input surface of the touch panel 21, the touch panel 21 also returns to the initial position. In the embodiment, a plurality of the push down detection units 31 is arranged so that it may support the four corners of the touch panel 21.

Further, a configuration which is, for example, a combination of a return mechanism using spring members or the like and a sheet switch, or a mechanical switch or the like having a predetermined push down strokes, can be applied well for the switch which is applied to the push down detection unit 31.

The control unit 41 displays the menu or icon button or the like on the display unit 11, which is similar to the control means 40 described in the above mentioned first embodiment. In addition, the control unit 41 sets the desired menu or icon button or the like displayed on the display unit 11 as the selecting status based on the contact information from the touch panel 21. Further, the control unit 41 executes a function corresponding to the selected desired menu or icon button or the like based on the detection signal from the push down detection unit 31.

The memory unit 42 accumulates information concerning the display method and the displayed content of the menu or icon button which is displayed on the display unit 11, information concerning the operation display which is displayed when the selected function is executed, and a program data or the like required for the control process in the control unit 41. Specifically, the memory unit 42 stores information concerning the display method such as the displayed content and the color reverse or the like of the menu or icon button, in a case that the user, for example, contacts the menu or icon button of the desired function and initiates the focus visual. In addition, the memory unit 42 stores information concerning the display method such as the displayed content and the color reverse or the like of the menu or icon button, when the operational display of the function by executing functions which is displayed under the focus visual, is displayed.

Next, the control method of the input device according to the embodiment is described.

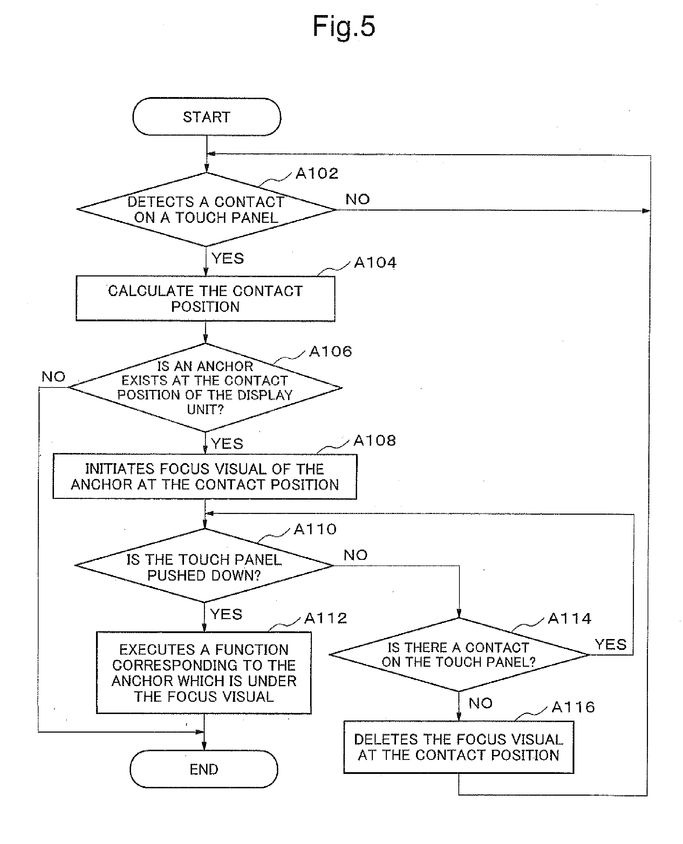

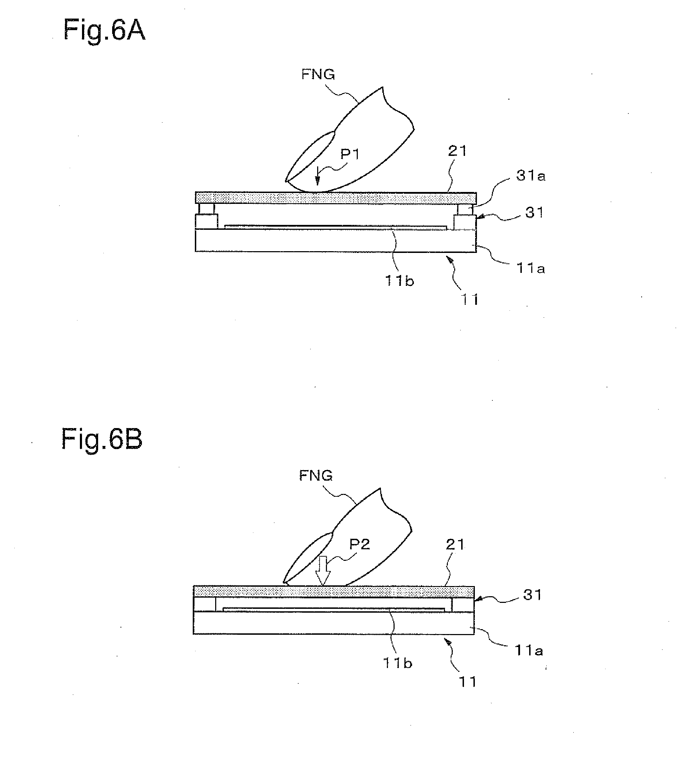

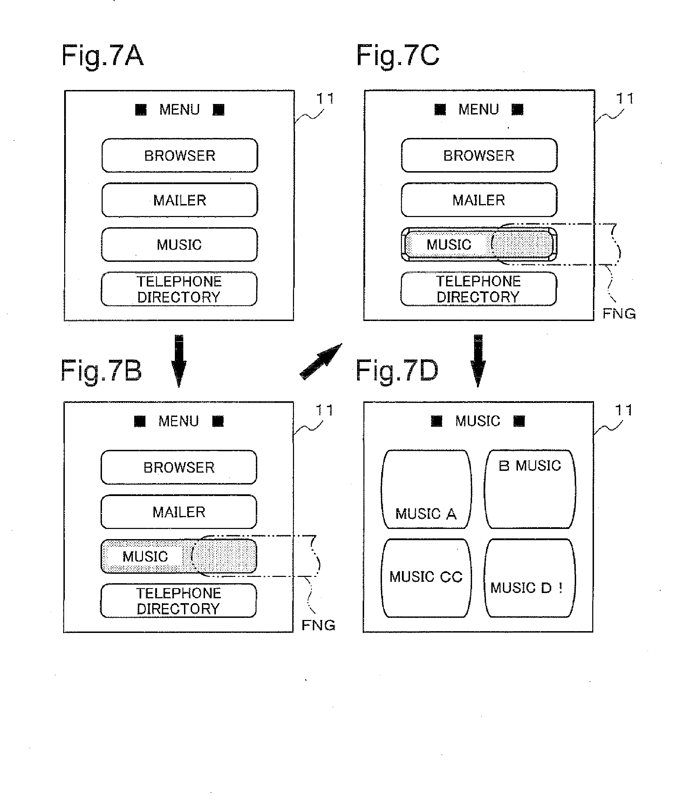

Fig. 5 is the flowchart showing the control method of the input device according to the second embodiment, Fig. 6A is the example of the conceptual drawing describing the control method of the input device according to the embodiment. Fig. 6B is the conceptual drawing showing an example of the status which pressing force of more than predetermined level is applied on the input surface of the touch panel of the input device shown in Fig. 6A. Here, in Fig. 6A and Fig. 6B, only the touch panel 21 is hatched. Fig. 7 is the diagram showing an example of a display unit for describing the control method of the input device according to the embodiment.

The example of the control method of the input device according to the embodiment is described, by referring to the flowchart in Fig. 5. At first, in Step A102, the touch panel 21 detects whether the finger contacted or not under the state that the list of the menu or icon buttons is displayed on the display unit 11.

Specifically, at first, as shown in Fig. 7A, the menu screen including a plurality of menu buttons is displayed on the display unit 11. Further, in Fig. 7A, it is indicated that a plurality of menu buttons or the like including "Browser", "Mailer" "Music", and "telephone directory" as the menu screen are arranged and displayed in a predetermined layout.

Under the state that such menu screen is displayed on the display unit 11, as shown in Fig. 6A, the user watches the screen of the display unit 11 and contacts with the finger FNG the input surface (surface) of the touch panel 21 which is located over a specific menu button which has the desired functions. As the result, the touch panel 21 detects the contact of the finger FNG and outputs the contact information to the control unit 41. At this status, the user places the finger FNG with the degree of light contact on the surface of the touch panel 21. That is, pressing force (contacting force) P1, which is far weaker than pressing force (pushing down force) P2 which is a degree which the push down status can be detected by the push down detection unit 31 by pushing down the touch panel 21, is applied on the input surface of the touch panel 21. Further, in Step A102, if the contact with the finger FNG to the touch panel 21 is not detected, the touch panel 21 waits until the finger or the like contacts the touch panel 21.

Then, in Step A104, the control unit 41 calculates the contact position of the finger FNG on the touch panel 21 based on the contact information which is detected by the touch panel 21.

Alter that, in Step A106, the control unit 41 determines whether or not the anchor (i.e. selectable menu or icon button) exists in the display area 11b of the display unit 11 corresponding to the contact position which is calculated in Step A104. Here, if the control unit 41 determines that the anchor does not exist, either the control process of the input device ends or returns to Step A102 mentioned above, and the touch panel 21 waits until the finger or the like contacts the touch panel 21.

On the other hand, in Step A106, when the control unit 41 determines that the anchor exists, in Step A108, the control unit 41 sets the anchor (menu or icon button) corresponding to the contact position as the selecting status and initiates the focus visual.

Specifically, as shown in Fig. 7B, the control unit 41 sets a menu button at the position that the user contacted with the finger FNG among a plurality of menu buttons displayed on the display unit 11 as the selecting status and displays the menu button reversely. Further,-Fig. 7B indicates a state that "Music" is selected among the menu buttons.

Then, in Step A110, the push down detection unit 31 detects whether or not the touch panel 21 is pushed down.

Here, when the touch panel 21 detects a push down state which a predetermined size is pressed down, in Step A112, the control unit 41 executes a function corresponding to the menu or icon button which is set as the selecting status and is displayed in the focus visual in Step A106. On the other hand, in Step A110, when pushing down of the touch panel 21 is not detected, the process proceeds to Step A114. In Step A114, the touch panel 21 detects whether or not the finger contacts itself, and the process returns to Step A110 in a case that the touch panel 21 detects that the finger contacts. In addition, when the touch panel 21 detects that the finger does not contact, the process proceeds to Step A116. In Step A116, the control unit 41 releases the anchor from the selecting status which is set as the selecting status in Step A108, and also the control unit 41 releases the focus visual of the released anchor from the selecting status. Then, the control unit 41 finishes the control process of the input device or returns to Step A 102 mentioned above, and waits until the finger or the like contacts with the touch panel 21.

Specifically, as shown in Fig. 6B, the user continues to apply since Step A102 with pressing force of more than predetermined level P2 (pushing down force) with the intention of selection on the input surface of the touch panel 21 by the finger FNG or the like which is placed on the touch panel 21. As the result, the touch panel 21 is pushed down, and by compressing the action part 31 a of the push down detection unit 31 accordingly, the push down status of the touch panel 21 is detected, and the detection signal is outputted from the push down detection unit 31.

Then, in Step A112, a function corresponding to the anchor (menu or icon button) which is displayed in the focus visual is executed.

Specifically, the control unit 41 outputs the control signal for executing the function corresponding to the menu button which is set as the selecting status and displayed reversely in the display unit 11 based on the detection signal from the push down detection unit 31. This control signal is inputted to the internal circuit (operation functioning unit) of the electronic apparatus, which is not shown in the diagrams, and the function is executed.

For example, as shown in Fig. 7B, a state that the menu button "Music" is selected is described. At this state, if the touch panel 21 is pushed down and the push down status is detected by the push down detection unit 31, the control unit 41 outputs the control signal to the internal circuit of the electronic apparatus for starting the function of the Music player corresponding to "Music". In addition, as shown in Fig. 7C, in order to show (report) that the function of the music player is initiated in accordance with the detection of the push down status of the touch panel 21, the control unit 41 executes a highlight display of the menu button "Music" of the display unit 11. Then, if the function of the music player is initiated by the internal circuit of the electronic apparatus, the control unit 41 changes the display unit 11 and displays an operational screen of the music player as shown in Fig. 7D.

In addition, Fig. 7D shows a state that the list of the music data which is stored in the memory unit 42 is displayed by the icon button as an example.

Thus, in the embodiment, by a user's light contact with the finger on the touch panel 21, a status of the desired menu or icon button which is displayed on the display unit 11 is set as the selecting status and the focus visual is initiated. Moreover, in the embodiment, the selected function is executed by pushing down the touch panel 21 without separating the finger or the like which is continuously placed on the touch panel 21 when selecting the menu or icon button.

That is, according to the embodiment, as is similar to the first embodiment mentioned above, there are no cases that the function which is selected by the user's single contact on the touch panel is executed immediately. For this reason, the user can check well the selecting status of the menu or icon button by the focus visual or the like. Accordingly, the embodiment can suppress incorrect operations when inputting operation of the electronic apparatus.

In addition, according to the embodiment, because the user does not need to contact a plurality of times on the touch panel 21 in order to execute a desired function, the user can execute the desired function by simple steps (procedures), and is similar to the first embodiment mentioned above. Accordingly, the embodiment can improve intricacy when inputting operation of the electronic apparatus.

Further, according to the embodiment, even if the input operation such as rubbing the surface of the touch panel 21 is executed, there are no cases that the undesirable function is executed illegally. For this reason, according to the embodiment, even in a case that too many items are displayed, the scrolling display or the like of the screen can be executed well. Accordingly, the embodiment can suppress incorrect operations when inputting operation of the electronic apparatus.

Further, according to the embodiment, by detecting the push down status (sinking status) of the touch panel 21, a selected desired function can be executed. For this reason, according to the embodiment, a feeling when inputting operation of the electronic apparatus can be realized similar to the case of a key input method.

Further, for the electronic apparatus mounting the well-known touch panel as described in the background art, an input operation is adopted wherein the user contacts once or a plurality of times on surface of the touch panel. For this reason, an electronic apparatus, in which the touch panel is installed, has an issue that a feeling at a time of inputting is less when comparing with a key input method which is applied widely for a general electronic apparatus that the operation button or the like is pushed moderately at a time of the input.

In contrast, according to the embodiment, a desired functions is executed by detecting the depressed status of the touch panel 21 in accordance with the impression of pressing force to the input surface of the touch panel 21. For this reason, according to the embodiment, a feeling at a time of the input operation can be realized similar to the case of the key input method.

Further, in the second embodiment mentioned above, a configuration has been described that the push down detection unit 31 is arranged at the four corners on one side of the panel substrate 11a of which the display unit 11 is composed, and the push down status (sink) of the touch panel 21 is detected based on the detection signal from the push down detection unit 31. Here, in the embodiment, a mutual relation between the four push down detection units 31 that are arranged at the four corners of the panel substrate 11a respectively, and a mutual relation between the detection signals that are generated by respective push down detection unit 31 has not been described in detail. In the embodiment mentioned above, as shown in Fig. 4B, a method of detecting the push down status of the touch panel 21 can be applied wherein all the push down detection units 31 activate in accordance with the impression of pressing force P to the input surface of the touch panel 21 and output all the detection signals.

Here, the embodiment is not limited to the above mentioned detection method. For example, in the embodiment, a method of detecting the push down status of the touch panel 21 may be included wherein at least one push down detection unit 31 activates in accordance with the impression of pressing force P to the input surface of the touch panel 21 and outputs the detection signal. Followings describe in detail of another exemplary configurations of the embodiment.

### (Another exemplary configurations)

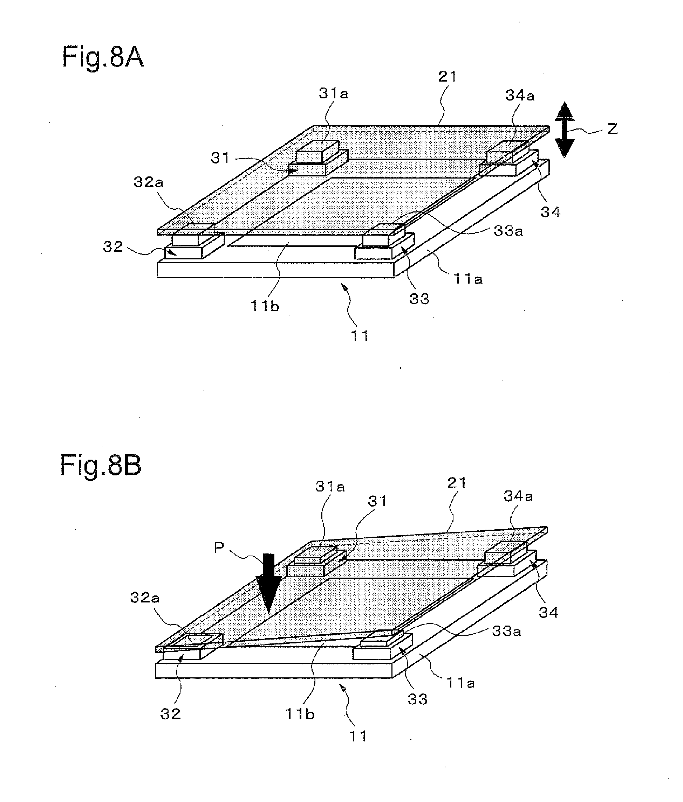

Fig. 8A is the perspective drawing showing another exemplary configuration of the input device according to the second embodiment.

Fig. 8B is the perspective drawing showing the example of the status which pressing force is applied from a biased direction on the input surface of the touch panel of the input device which is shown in Fig. 8A. As shown in Fig. 8A, as is similar to the configuration shown in Fig. 4A, the input device according to the exemplary configuration includes the push down detection units 31 to 34 having the action part 31a to 34a respectively at the four corners of one side (display surface side) of the panel substrate 11a. The control unit 41, which is not shown in the drawings, determines the push down status of the touch panel 21 based on the detection signal which is outputted from at least one among respective push down detection units 31 to 34.

In such an input device, as shown in Fig. 8B for example, the case is checked that the touch panel 21 is, by the applied pressing force (pushing down force) P to the input surface on the touch panel 21 is biased, tilted. In such a case, pressing forces that are applied on the action parts 31a to 34a of respective push down detection units 31 to 34 are different each other. As shown in Fig. 8B, for example, the action part 32a of the push down detection unit 32 is compressed sufficiently, and the push down detection unit 32 outputs the predetermined detection signal. On the other hand, remaining action parts 31a, 3 3 a and 34a corresponding to push down detection units 31, 33 and 34 respectively are not compressed sufficiently, and as a result, remaining push down detection units 31, 33 and 34 do not output the detection signal.

In the input device according to the exemplary configuration, even in such case, the control unit 41 can determine a push down status of the touch panel 21 based on the detection signals outputted from at least one (in Fig. 8B, the push down detection unit 32) among the push down detection units 31 to 34. That is, because the user can selects and executes the function corresponding to the menu or icon button shown at the corner of the display unit 11 as an example, even it pressing force P is applied on the input surface of the touch panel 21 at this position, the desired function is able to execute well.

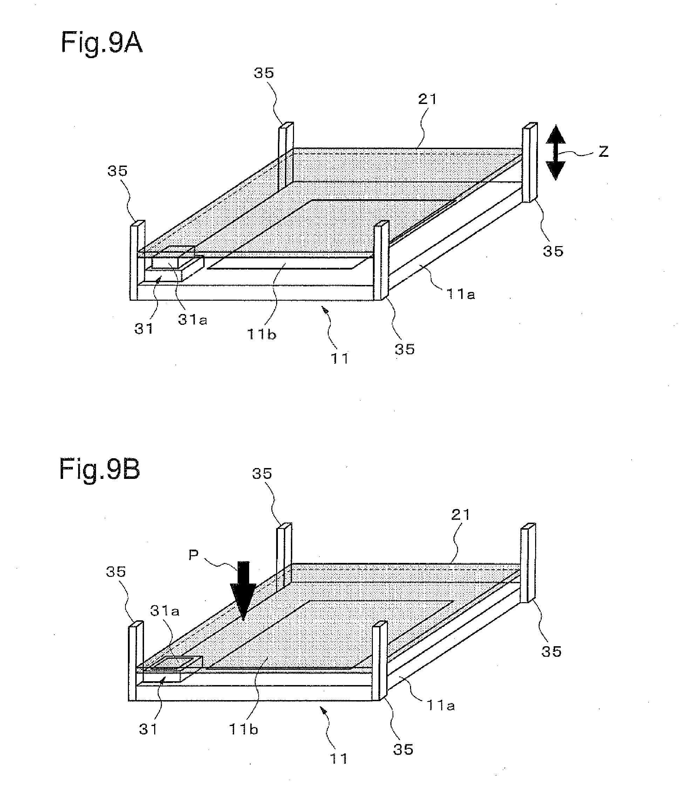

Fig. 9A is the perspective drawing showing another exemplary configuration of the input device according to the second embodiment. Fig. 9B is the perspective drawing showing an example of the status which pressing force is applied from a biased direction on the input surface of the touch panel of the input device which is shown in Fig. 9A. As shown in Fig. 9A, the single push down detection unit 31 is arranged at a corner of the one side (display surface side) of the panel substrate 11a according to the exemplary configuration of the input device. In addition, in the input device according to the exemplary configuration, even if pressing force P is biased and applied to the input surface of the touch panel 21, the touch panel 21 keeps a state of horizontal level to the display surface of the display unit 11 and moves relatively in vertical direction to the display surface. This is because, guide-rails 35 are installed in the touch panel 21 so that, with keeping a status of horizontal level to the display surface of the display unit 11, the touch panel 21 moves relatively in vertical direction to the display surface and is pushed down to Z-direction in Fig. 9A. Here, for example, the guide-rails 35 are configured so as to support the four corners of the touch panel 21 and be able to slide to the Z-direction. The control unit 41, which is not shown in the drawings, determines a push down status of the touch panel 21 based on the detection signal which is outputted from the single push down detection unit 31.

In this kind of input device, as shown in Fig. 9B for example, by applying pressing force (pushing down force) P on the input surface of the touch panel 21, the touch panel 21 moves to vertical direction to the display surface of the display unit 11 along the guide-rails 35 which support the four corners of the touch panel 21.

As the result, according to the input device of the exemplary configuration, the push down status of the touch panel 21 can be determined based on the detection signal which is outputted from the single push down detection unit 31. That is, according to the input device of the exemplary configuration, because the four corners of the touch panel 21 are supported by the guide-rails 35, even if the applied pressing force is biased on the input surface of the touch panel 21, the touch panel 21 keeps horizontal level to the display surface of the display unit 11. Further, in this case, the touch panel 21 moves in vertical direction to the display surface of the display unit 11 along the guide-rails 35. Accordingly, for the input device according to the exemplary configuration, even if the input device has a configuration that single push down detection unit 31 is installed, the input device can accurately detect the push down status of the touch panel 21 and select and execute well the desired functions.

Further, for the second embodiment and respective exemplary configuration mentioned above, although the configuration is described that the push down detection unit 31 is arranged at the four corners or a corner of the panel substrate 11a of which the display unit 11 is composed, the present invention is not limited to the above mentioned embodiments. That is, the push down detection unit according to the embodiment may includes another configurations if it can detect a status (push down status) that the touch panel 21 is depressed with the impression of pressing force to the input surface of the touch panel 21. That is, one or a plurality of the push down detection units may be arranged at a surrounding part of the panel substrate 11a or at any area other than the display area 11b of the panel substrate 11a, as an example.

### <Third embodiment>

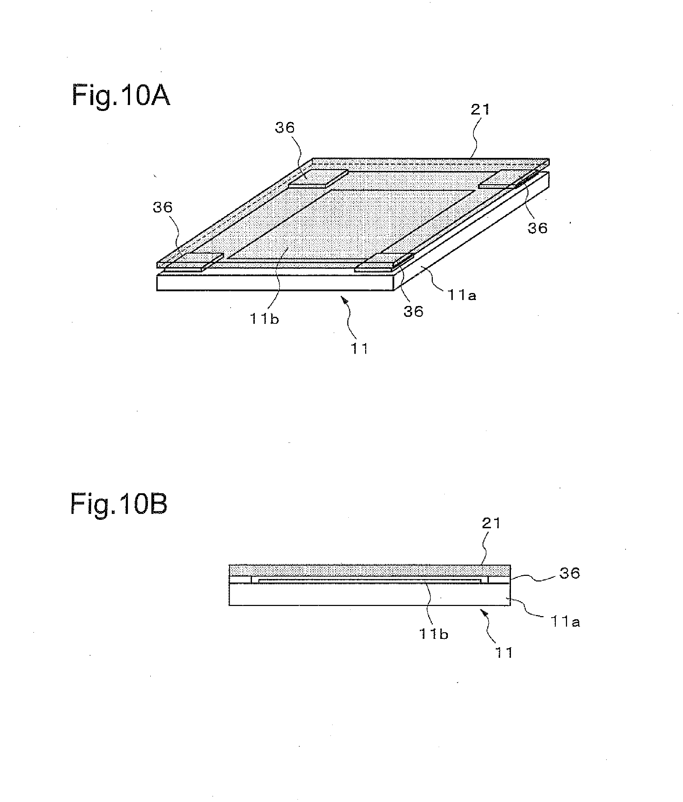

Fig. 10A is the perspective drawing showing the third embodiment of the input device according to the present invention.

Fig. 10B is the example of the side view drawing of the input device which is shown in Fig. 10A. Here, identical codes are assigned for the configuration equal to the second embodiment (refer to Fig. 3, Fig. 4A, and Fig. 4B) mentioned above and the descriptions thereof are abbreviated or omitted. In addition, in Fig. 10A and Fig. 10B, in order to clear the positional relationship between respective configurations, the touch panel 21 is hatched expediently and indicated, because of conveniences of the drawings.

The input device according to the third embodiment is characterized in that a pressure sensor is applied as the push down detection unit in the configurations (refer to Fig. 4A and Fig. 4B) described in the second embodiment.

Specifically, as shown in Fig. 10A and Fig. 10B, the input device according to the embodiment includes a configuration in which a pressure sensor 36 is arranged at each four corners of one side (display surface side, i.e. upper side of the drawing) of the panel substrate 11a of the display unit 11. The pressure sensor 36 in the embodiment is an example of the detection means in the first embodiment.

That is, as shown in Fig. 10A, the touch panel 21 is supported at the four corners by the pressure sensors 36 that are arranged at the four corners of one side of the panel substrate 11a.

The pressure sensors 36 are switches which detect the applied status of pressing force to the input surface (surface) of the touch panel 21, and outputs the predetermined detection signal (ex. detection voltage) to the control unit 41, which is not shown in the drawings, corresponding to pressing force applied on the input surface of the touch panel 21.

The control unit 41 determines a status (pressing status) that pressing force of more than predetermined level is applied on the input surface of the touch panel 21 based on the detection signal which is outputted from the pressure sensors 36.

For the control method of the input device having these configurations, at first, a user places a finger or the like on the input surface (surface) of the touch panel 21 with degree of light contacts at a position corresponding to a desired menu or icon button which is displayed on the display unit 11. That is, although the control unit 41 determines whether or not the touch panel 21 is in a pressing status based on the detection signals which is outputted from the pressure sensors 36, the pressing force with a degree of far weaker than pressing force of the grade which the control unit 41 judges the pressing status, is applied on the touch panel 21. As the result, the control unit 41 sets the menu or icon button corresponding to the contact position detected by the touch panel 21 as the selecting status, and initiates the focus visual.

Then, the user applies with pressing force of more than predetermined level on the input surface of the touch panel 21 by a finger or the like which is placed on the touch panel 21 with the intention of selection. As the result, the detection signals (detection voltage) corresponding to pressing force is outputted from the pressure sensors 36 to the control unit 41. The control unit 41 outputs the control signal to the internal circuit (operation functioning unit) of the electronic apparatus, which is not shown in the drawings, for executing the function corresponding to the menu or icon button which are set as the selecting status and which the focus visual are initiated by the display unit 11, based on the detection signal from the pressure sensors 36. As the result, a function corresponding to the menu or icon button which is selected at the electronic apparatus is executed.

Thus, in the embodiment, by the user's light contacts with the finger or the like on the touch panel 21 similar to respective embodiment mentioned above, the desired menu or icon button is set as the selecting status and the focus visual of the desired menu or icon button is initiated. Then, applying with pressing force of more than predetermined level on the input surface of the touch panel 21 without separating the finger or the like which is placed on the touch panel 21 from the touch panel 21, the selected function can be executed.

Accordingly, according to the embodiment, after checking well the selecting status of the desired menu or icon button by the focus visual or the like, the user can execute the function. Therefore, incorrect operations when inputting operation of the electronic apparatus can be suppressed.

In addition, according to the embodiment, a desired function can be executed by applying with pressing force of predetermined level without separating the finger or the like which is placed on the touch panel for selecting the desired menu or icon button. For this reason, intricacy when inputting operation of the electronic apparatus can be improved.

Further, according to the embodiment, even if the input operation by rubbing the surface of the touch panel 21 is executed for a case that too many items are displayed and the scrolling display or the like of the screen is executed, there are no cases that the undesirable functions are executed illegally. For this reason, an incorrect operation when inputting operation of the electronic apparatus can be suppressed.

### <Fourth embodiment>

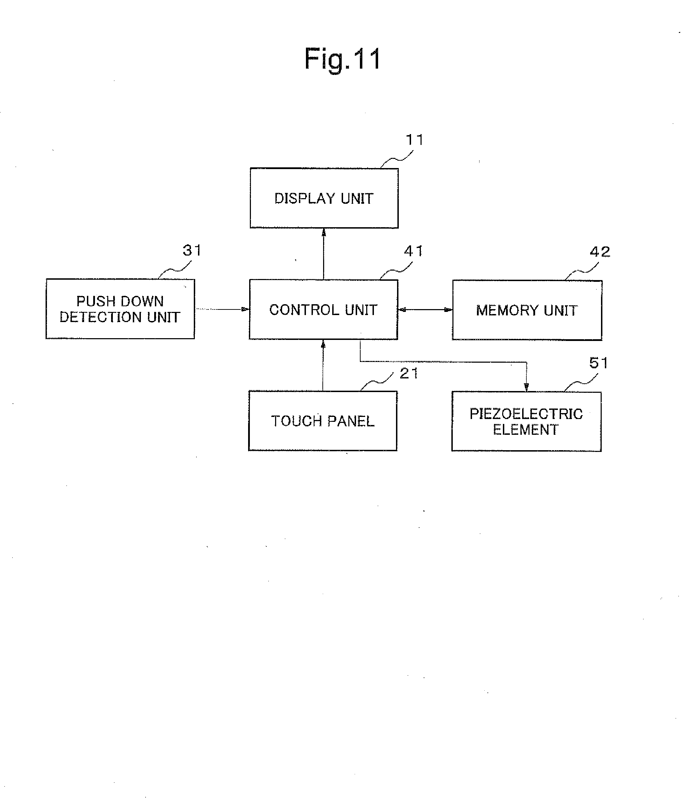

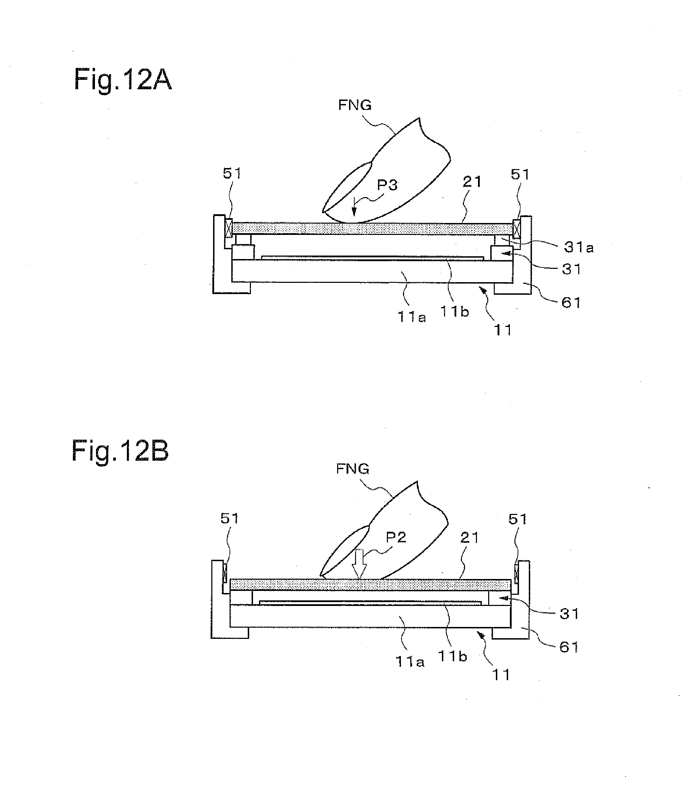

Fig. 11 is the schematic configuration diagram showing the fourth embodiment of the input device according to the present invention. Here, identical codes are assigned for the configuration equal to the second embodiment (refer to Fig. 3, Fig. 4A, and Fig. 4B) mentioned above and the descriptions thereof are abbreviated or omitted. Fig. 12A is the side view drawing showing an example of a schematic configuration of the input device according to the embodiment. Fig. 12B is the drawing showing an example of the status which pressing force of more than predetermined level is applied on the input surface of the touch panel of the input device which is shown in Fig. 12A.

As shown in Fig. 11. the input device according to the fourth embodiment includes piezoelectric elements 51 in addition to the configuration (refer to Fig. 3) of the input device according to the second embodiment. Here, because the display unit 11, the touch panel 21, the push down detection unit 31, and the memory unit 42 are identical with those in the second embodiment mentioned above, descriptions are omitted. In the embodiment, the piezoelectric element 51 is an example of the stopper means according to the present invention.

The touch panel 21 moves relatively to the vertical direction against the display surface of the display unit 11 by applying pressing force of predetermined level on the input surface of the touch panel 21. The piezoelectric element 51 is a control element which prevents a movement of the touch panel 21 which moves relatively to the vertical direction against the display surface of the display unit 11.

The piezoelectric element 51 is a control element which prevents a movement of the touch panel 21 which moves relatively to the vertical direction, which is caused by applying pressing force of predetermined level on the input surface of the touch panel 21, against the display surface of the display unit 11. As shown in Fig. 12A, for example, a plurality of piezoelectric elements 51 are installed in the inner wall surface of the housing 61 which houses, at least, the display unit 11, the touch panel 21, and the push drown detection unit 31. The piezoelectric element 51 has a characteristic of transforming according to control voltage. In addition, the piezoelectric element 51 is configured so as to control movement (or slide) of the touch panel 21, according to the selecting status of the menu or icon button which is displayed in the display unit 11.

Then, according to the embodiment, by changing an excrescence quantity in the vertical direction to the inner wall surface of the housing 61 based on the control signal (control voltage) from the control unit 41, the piezoelectric elements 51 produce pressing force in the vertical direction against movement direction of the touch panel 21. That is, a frictional force is produced between the piezoelectric elements 51 and the housing 61 and the touch panel 21 by applying with pressing force of predetermined level on the side of the touch panel 21 by the piezoelectric elements 51, and the movement of the touch panel 21 is prevented (prohibited).

In addition to the control operation which is described in the second embodiment mentioned above, the control unit 41 controls the operations of the piezoelectric elements 51 according to the contact information from the touch panel 21 and the selecting status of the menu or icon button which is displayed on the display unit 11. As the result, the control unit 41 controls a possibility of movement (or slide) of the touch panel 21 to the vertical direction of the display surface of the display unit 11.

Then, a control method of the input device is described according to the embodiment.

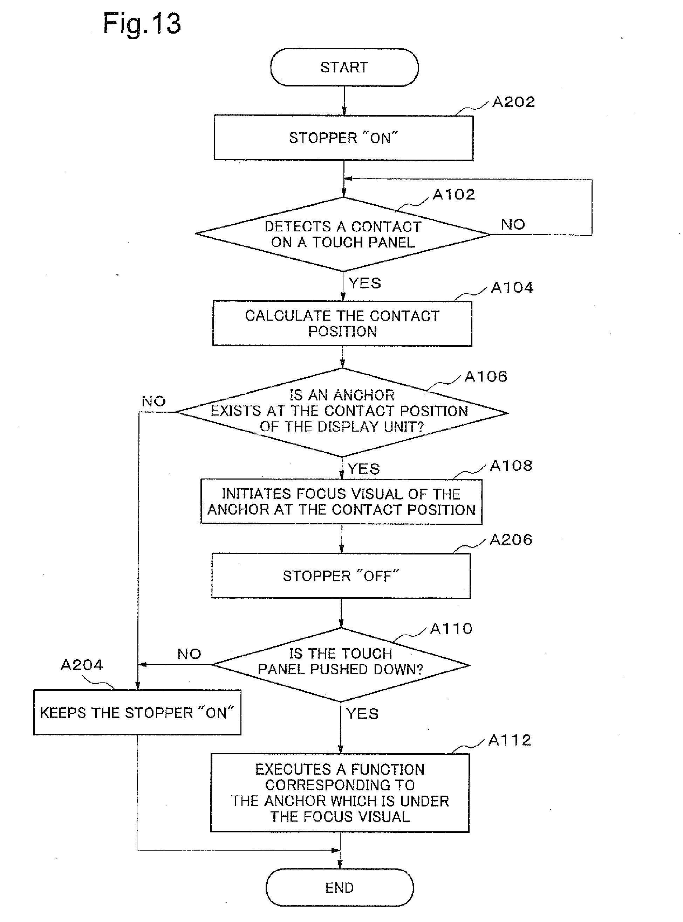

Fig. 13 is the flowchart showing an example of the control method of the input device according to the fourth embodiment. Here, identical codes are assigned for the configuration equal to the second embodiment (refer to Fig. 6A and Fig. 6B) mentioned above and the descriptions thereof are abbreviated or omitted. In addition, in the following description, it describes the control method of the input device according to the embodiment by referring the schematic configuration shown in Fig. 12A and Fig. 12B if it is needed.

The control method of the input device according to the embodiment is described based on the flowchart which is shown in Fig. 13. In Step A202, as an initial status, the control unit 41, which is not shown in the drawings, sets the touch panel 21 in the state (on-status of the stopper) that the relative movement to directions of display unit 11 of the touch panel 21 is prevented (prohibited),

Specifically, the control unit 41 outputs the control signal for activating the preventive operation (i.e. operation of preventing a movement of the touch panel 21) of the piezoelectric element 51. Accordingly, the piezoelectric elements 51 press a side of the touch panel 21 and prevents the movement of the touch panel 21 to the vertical direction to the display surface of the display unit 11.

Then, in Step A102, the touch panel 21 detects whether or not the user's finger FNG contacted with the touch panel 21, under a state that the list of the menu or icon buttons is displayed on the display unit 11.

Then, if the touch panel 21 detects the contact of the finger FNG, the touch panel 21 outputs the contact information to the control unit 41. In this case, movement of the touch panel 21 to the directions of display unit 11 is prevented by the piezoelectric elements 51. For this season, as shown in Fig. 12A, even if any pressing force P3 is applied on the input surface (surface) of the touch panel 21 by the finger FNG, the touch panel 21 does not move (or slide). Further, in Step A102, when the contact of the finger FNG, to the touch panel 21 is not detected, the control unit 41 continues a waiting status.

Then, in Step A104, the control unit 41 calculates the contact position of the finger FNG on the touch panel 21 based on the contact information detected by the touch panel 21.

After that, in Step A106, the control unit 41 determines whether or not the anchor (i.e. selectable menu or icon button) exists at a part of the display area 11b of the display unit 11 corresponding to the calculated contact position. Here, if the control unit 41 determines that the anchor does not exist, in Step A204, a status of preventing a movement (on-status of the stopper) of the touch panel 21 is kept. After that, the control unit 41 finishes the control process of the input device, or the process returns to Step A102 mentioned above and the control unit 41 waits until the finger or the like may contact the touch panel 21.

On the other hand, in Step A106, when the control unit 41 determines that the anchor exists, in Step A108, the control unit 41 sets the anchor (menu or icon button) corresponding to the contact position as the selecting status and initiates the focus visual.

In addition, before Step A108 or after Step A108, or almost simultaneously with Step A108, the control unit 41 sets the touch panel 21 in the state that movement of the touch panel 21 is permitted (off-state status of the stopper), as shown in Step A206. Specifically, the control unit 41 outputs the control signal for releasing the preventive operation of the piezoelectric element 51. Then, the pressing to the side of the touch panel 21 by the piezoelectric elements 51 is removed, and movement to the vertical direction of the display surface of the display unit 11 is allowed.

Next, in Step A110, the push down detection unit 31 detects whether or not the touch panel 21 is pushed down. Here, when pushing of the touch panel 21 is not detected, in Step A204, the control unit 41 keeps the status (on-status of the stopper) of preventing a movement of the touch panel 21. After that, the control unit 41 finishes the control process of the input device, or the process returns to Step A102 mentioned above and the control unit 41 waits until the finger or the like contacts the touch panel 21.

On the other hand, in Step A110, if the push down status that the touch panel 21 is pushed down in the predetermined size is detected, then in Step A112, the control unit 41 executes the function corresponding to the menu or icon button which is set as the selecting status and the focus visual is initiated,

In this case, as shown in Fig. 12B, the user applies with pressing force of more than predetermined level (pushing down force) P2 on the input surface of the touch panel 21 with the intention of selection by the finger FNG which is continuously placing on the touch panel 21 since Step A102. As the result, the touch panel 21 is pushed down, the push down status of the touch panel 21 is detected by the push down detection unit 31, and the detection signal is outputted to the control unit 41.

Thus, in the embodiment, as the third step, under a state that the menu or icon button is not selected (non-selecting status), the touch panel 21 is set in a status that the movement of it is inhibited by the piezoelectric elements 51 (on-status of the stopper). Then, by the user's setting of the desired menu or icon button as the selecting status, the touch panel 21 is set in the movable state (off-state status of the stopper) by the piezoelectric elements 51. As the result, according to the embodiment, because there are no cases that the function is selected and is executed carelessly by an undesirable contact and an impression of pressing force to the touch panel 21, erroneous operations can be suppressed when inputting operation of the electronic apparatus.

In addition, even in the embodiment, similar to respective embodiment mentioned above, the user can executes the function after cheeking well the selecting status of the desired menu or icon button by the focus visual or the like. For this reason, incorrect operations can be suppressed when inputting operation of the electronic apparatus.

In addition, even in the embodiment, the desired function can be executed by applying with pressing force of predetermined level without separating the finger or the like which is placed on the touch panel 21 in order to select the desired menu or icon button. Therefore, intricacy can be improved when inputting operation of the electronic apparatus.

Further, in the embodiment, even in a case of executing input operations such as executing the scrolling display or the like of the screen by rubbing the surface of the touch panel 21, there are no cases that the undesirable functions are executed illegally. For this reason, incorrect operations can be suppressed when inputting operation of the electronic apparatus.

In addition, in the embodiment, by detecting the push down status (sinking) of the touch panel 21, the selected desired function can be executed. For this reason, a feeling at a time of the input operation to the electronic apparatus can be realized similar to the case for the key input method.

Further, in the embodiment, although the structure of the input device to which the piezoelectric elements 51 are applied is described as the example of the stopper means, the present invention is not limited to the above mentioned embodiment.

That is, in the state that the menu or icon button which is displayed on the display unit 11 is not selected, the present invention may includes another configurations that can keep in the state (on-status of the stopper) that does not move the touch panel 21 to a direction of display unit 11. For example, specifically, at a time of the state that the menu or icon button is not selected, by inserting a member in a gap between the panel substrate 11a and the touch panel 21 of the display unit 11, a mechanism can be applied that movement to the directions of display unit 11 of the touch panel 21.

In addition, in the embodiment mentioned above, although a configuration of interposing the push down detection unit between the panel substrate and the touch panel of the display unit is described, the present invention is not limited to the above mentioned embodiment. That is, the present invention may apply to another configurations if it can distinguish between pressing force (contacting force) which is applied when the user selects the desired menu or icon button and pressing force (pushing down force) which is applied when the function corresponding to the selected menu or icon button is executed.

While having described an invention of the present Application referring to the embodiments, the invention of the present application is not limited to the above mentioned embodiments.

It is to be understood that to the configurations and details of the invention of the present application, various changes can be made within the scope of the invention of the present application by those skilled in the arts.

This application claims priority from Japanese Patent Application No. 2008-238063, filed on September 17, 2008, the contents of which are incorporation herein by the reference in their entirety,

## Claims

1. An input device comprising:
display means that displays information;
an input panel that is arranged at a display surface side of the display means, and has an input surface and outputs a contact information by detecting a contact at the input surface;
detection means that outputs a detection signal which shows that a pressing force is applied when the pressing force is applied on the input surface of the input panel; and
control means that detects a contact position of the input panel based on the contact information which the input panel outputted, sets display information at a position corresponding to the contact position of the display means as a selecting status, and executes a process in relation to the display information based on the detection signal when the detection means outputs the detection signal under a state that the input panel continues detecting the contact.

2. The input device according to claim 1, wherein
the control means executes a specific function based on the detection signal when the detection means outputs the detection signal in a case that the display information set as the selecting status is information in relation to a specific function.

3. The input device according to claims 1 or 2, wherein
the input panel moves to the direction of the display surface of the display means when the applied pressing force on the input surface is over predetermined level, and
the detection means detects the movement of the input panel and outputs the detection signal.

4. The input device according to claim 3 wherein.
the input panel moves under a state that keeps horizontal level to the display surface of the display means.

5. The input device according to claims 3 or 4, further comprising:
stopper means that prevents a movement of the input panel to the display surface of the display means.

6. The input device according to claim 5, wherein
the control means controls the stopper means so as to prevent movement of the input panel when the display information in the display means is under a noun-selecting status,

7. The input device according to claims 5 or 6, wherein
the stopper means has a mechanism of projecting to a vertical direction against movement direction of the input panel.

8. The input device according to claims 1 or 2, wherein
the detection means is a pressure sensor.

9. The input device according to any one of claims 1 to 8, wherein
a plurality of the detection means are installed, and
the control means executes a process in relation to the display information when predetermined number of the detection means among the plurality of the detection means output the detection signals.

10. The input device according to any one of claims 1 to 9, wherein
the detection means is arranged at a surrounding part of the input panel.

11. A control method of an input device that has a display means which displays information and has an input panel which is arranged in a display surface side of the display means, comprising:
setting display information at a position of the display means corresponding to a contacted position of the input surface as a selecting status when the input panel detects a contact at the input surface of the input panel, and
executing processes in relation to the display information based on a detect situation when detecting that a pressing force is applied on the input surface of the input panel under a status that the input panel keeps detecting the contact.

12. The control method of the input device according to claim 11, wherein
executing a specific function based on the detect situation when detecting that pressing force is applied on the input surface of the input panel in a case that the display information which is set as the selecting status, is information in relation to a specific function.

13. The control method of the input device according to claims 11 or 12, wherein
detecting that the input panel moves to a direction of the display surface of the display means when the pressing force of more than predetermined level is applied on the input surface, and
executing processes in relation to the display information when detected.

14. The control method of the input device according to claim 13, wherein
preventing the movement of the input panel when the display information in the display means is under a non-selecting status.

15. The control method of the input device according to any one of claims 11 to 14, wherein
the input device has a plurality of detection means detecting that pressing force is applied on the input surface of the input panel, and
executing processes in relation to the display information based on the detect situation when the predetermined number of the detection means among these detection means detect that pressing force is applied on the input surface of the input panel.

16. An electronic apparatus, comprising:
the input device according to any one of claims 1 to 10; and
an operation functioning unit that executes a specific function based on the input operation to the input device.
